# EUROPEAN PATENT SPECIFICATION

(11) **EP 2 295 184 B1**
(45) Date of publication and mention of the grant of the patent: **09.05.2012**
(21) Application number: 10176664.0
(22) Date of filing: 14.09.2010
(51) Int. Cl.: B23K 1/012

(54) **Device for soldering conducting ribbon to photovoltaic cells**
Vorrichtung zum Löten von einem elektrisch leitenden Band auf photovoltaischen Zellen.
Dispositif de brasage d'un ruban conducteur sur des cellules photovoltaïques.

(30) Priority: 14.09.2009 IT PD20090264
(43) Date of publication of application: 16.03.2011
(73) Proprietor: Ecoprogetti S.R.L., 35010 Carmignano di Brenta (PD) (IT)
(72) Inventor: Sgarbossa, Manuel, 35014, FONTANIVA PD (IT); Sartore, Domenico, 35010, CARMIGNANO DI BRENTA PD (IT)
(74) Representative: Modiano, Micaela Nadia

(56) References cited:
- DE-U1- 29 621 604
- GB-A- 2 329 146
- JP-A- 2 143 274
- US-A- 5 411 897

## Description

The present invention refers to a device for soldering conducting ribbon to photovoltaic cells. DE 296 21 604 U1 discloses a device for soldering conducting parts.

As is known, the implementation of a solar panel of the photovoltaic type, or for simplicity 'photovoltaic module', requires the junction in series of a plurality of photovoltaic cells so as to define what is called a string of cells, such strings then being interconnected to make up the photovoltaic module.

The junction of two side-by-side photovoltaic cells is performed by soldering one or more parallel copper ribbons, each ribbon being covered by a tin alloy and being known in the jargon simply as a 'ribbon', onto the bus bar i.e. the electron collector grid defined on the face of the cell that is exposed to the sun. Each ribbon protrudes with one portion from the edge of a first cell to which it is soldered, so as to allow the soldering of this end portion to the metallized lower face of the second side-by-side photovoltaic cell.

By means of such soldering joints, the negatively charged surfaces of one cell are connected to the positively charged regions of the adjacent cell.

A first method which is currently used for soldering the conducting ribbon onto the photovoltaic cells is known as contact soldering.

With such contact soldering, the ribbon is soldered onto the cells by means of the heat yielded, via contact, by a hot body that physically touches the surface of the cell.

The growth of the photovoltaic sector and its associated technological development have driven the market towards cells of increasing thinness (currently around 160 microns) to achieve savings in silicon and to reduce production costs.

This tendency has made the contact soldering method ever more difficult and less workable, because of the problems associated with the thermal and mechanical stresses owing to pressure of contact, which is difficult to manage in case of soldering onto cells with a thickness of about 200 microns.

To resolve this drawback, means of soldering conducting ribbon onto photovoltaic cells have been developed, which use sources of heat that are capable of soldering without contact: these are hot air soldering means, laser soldering means, and infrared soldering means.

With hot air soldering, a conducting ribbon is joined to a photovoltaic cell by exploitation of the heat produced by a source of hot air directed onto the tracks of the cells (the bus bar described above) on which the soldering is being performed.

This method of soldering has limitations which are linked to the fact that no pressure is applied to the ribbon against the surface of the cell; so the ribbon, being unwound from a reel, is not always laid onto the cell in such a way that it is perfectly parallel to it, and therefore it needs a certain amount of pressure to adhere continuously to the surface of the cell.

With infrared soldering the conducting ribbon is soldered onto the cells by means of a source of infrared rays, and with laser soldering a laser source is used.

These solutions suffer first and foremost from the problem of high cost which is proportional to the cost of the energy sources, and also they have been found to not always be reliable as well as being difficult to implement.

The aim of the present invention is to provide a device for soldering conducting ribbon to photovoltaic cells as disclosed in the preamble of claim 1, that can overcome the above-mentioned limitations of the methods and means of soldering of the known type.

Within this aim, an object of the invention is to provide a device for soldering conducting ribbon to photovoltaic cells, which can easily be adapted to performing soldering both onto cells that are particularly thin, and also onto cells that are not particularly thin.

Another object of the invention is to provide a device that is designed to function without the necessity to resort to expensive technologies such as laser or infrared.

A further object of the invention is to provide a device that is simple to handle and move, and which also has actuator means that are simple and of a type that is in and of itself known.

A further object of the invention is to provide a device for soldering conducting ribbon to photovoltaic cells, which is structurally simple and easy to use, and which can be produced at low cost.

This aim, as well as these and other objects which will become better apparent hereinafter, are achieved by a device for soldering conducting ribbon to photovoltaic cells, characterized in that it comprises a supporting body for at least one row of gliding elements arranged so as to protrude from a face of said supporting body in order to glide on a conducting ribbon arranged on a photovoltaic cell, said gliding elements floating in a direction that is transverse to the advancement direction, and being heated and pressed against the conducting ribbon by a transfer fluid, which in turn is heated by heating means associated with said supporting body.

Further characteristics and advantages of the invention will become better apparent from the following detailed description of a preferred, but not exclusive, embodiment of the device according to the invention, illustrated, by way of non-limiting example, in the accompanying drawings, wherein:
Figure 1 is a perspective view from below of a device according to the invention;
Figure 2 is a perspective view from above of a first component of the device according to the invention;
Figure 3 is a view from above of a second component of the device according to the invention;
Figure 4 is a view from above of a third component of the device according to the invention;
Figure 5 is an exploded perspective view of the supporting body of the device according to the invention;
Figure 6 is a front view in cross-section of the device according to the invention;
Figure 7 is an end view of the device according to the invention;
Figures 8a, 8b and 8c schematically show the movements of the device according to the invention.

With reference to the figures, a device for soldering conducting ribbon to photovoltaic cells is generally indicated with the reference numeral 10.

The device 10 comprises a supporting body 11 for three rows 12 of gliding elements, arranged so as to protrude from a face 13 of the supporting body 11 in order to glide on a conducting ribbon arranged on a photovoltaic cell, according to the workings better described hereinafter.

In the embodiment described herein the gliding elements are implemented as metallic rollers 15.

The metallic rollers 15 float in a direction that is transverse to the advancement direction.

The metallic rollers 15 are heated and pressed against the conducting ribbon by a transfer fluid which in turn is heated by heating means 14 associated with the supporting body 11.

The number of three rows 12 of metallic rollers 15 is indicative and non-limiting, in that the device 10 can also be implemented with one row of gliding elements only, or with two rows, or with more than three rows, according to the needs and to the requirements.

In the embodiment of the invention described herein for the purposes of non-limiting example of the invention, the transfer fluid is air, introduced in the supporting body 11 by means of a tube 16.

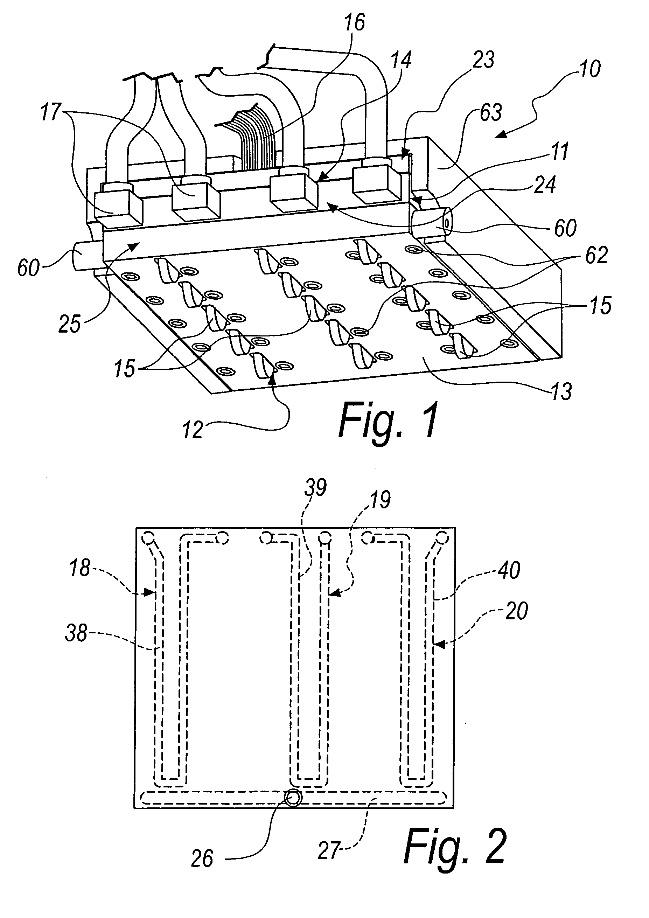

The heating means 14 for the transfer fluid are constituted by a plurality of electrical resistors 17, of which in figure 1 the electrical connection terminals can be seen, which are inserted within the supporting body 11. The supporting body 11 is provided so as to have in its interior labyrinth-like ducts 18, 19 and 20 for heating the transfer fluid, and for conveying the hot transfer fluid toward the seats 21 and 50 for the metallic rollers 15, so as to heat these rollers 15.

The accommodations for the electrical resistors are provided by longitudinal holes 22 formed in the supporting body 11 itself.

The supporting body 11 is made with three plates, a first upper plate 23, a second central plate 24, and a third lower plate 25.

The first upper plate 23 is made of metallic material and preferably of bronze.

The first plate 23 has an intake hole 26 for the transfer fluid, which comes from the above-mentioned tube 16 which is in turn connected to a pump or to a pressurized air line which is of the industrial type and in and of itself known.

The intake hole 26 is a through hole and leads onto a first channel 27 that is open on the side of the lower face 28 of the first plate 23. This first channel 27 runs transversely to the first plate 23, so as to convey the pressurized air both centrally and at the sides of the first plate 23, from which the labyrinth-like ducts 18, 19 and 20 extend.

The second central plate 24 is made of metallic material and preferably of bronze, and has longitudinal holes 22 for the electrical resistors.

This second plate 24 has three through holes, respectively a second through hole 29, a third through hole 30 and a fourth through hole 31.

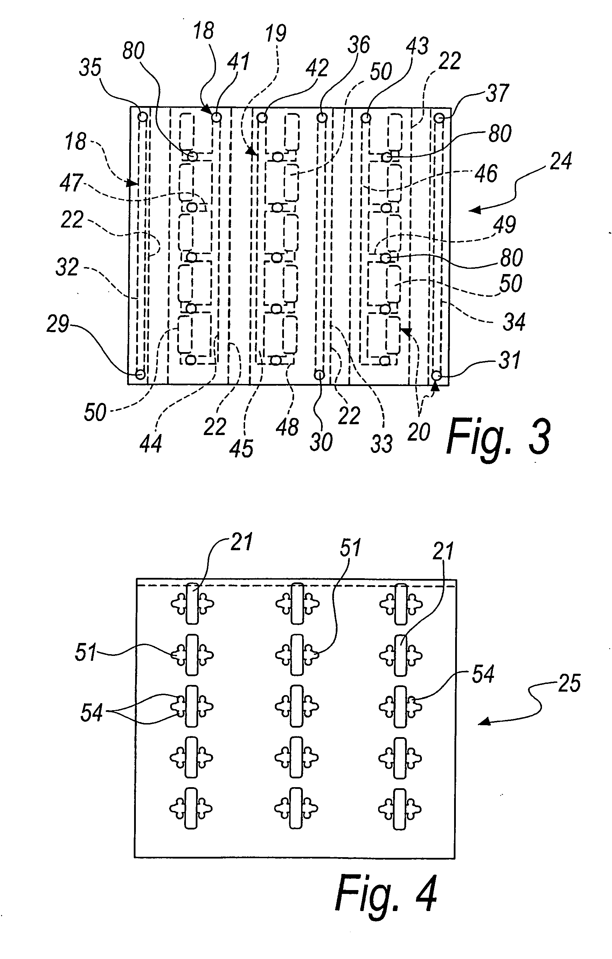

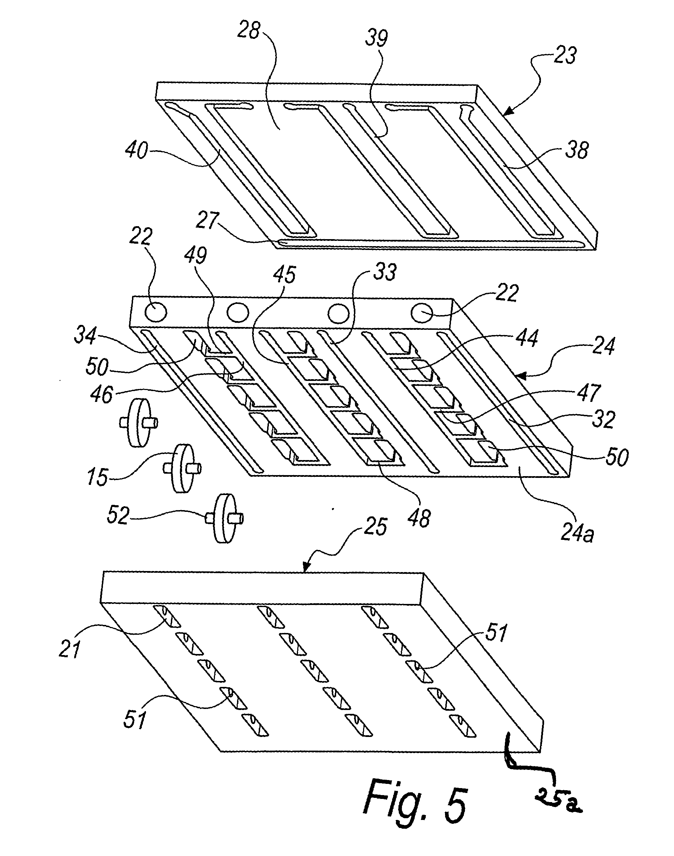

Through these through holes 29, 30 and 31 the air descends from the first, transverse, channel 27 in three longitudinal channels, 32, 33 and 34 respectively, formed in the lower face 24a of the second plate 24, each channel being part of one of the labyrinth-like ducts 18, 19 and 20. These longitudinal channels can be clearly seen in figures 3 and 5.

At the ends of the longitudinal channels which are opposite the through holes 29, 30 and 31, there are further through holes, rising, 35, 36 and 37 respectively.

By means of these first longitudinal channels 32, 33 and 34, the air travels the length of the second plate and then returns by means of the rising holes 35, 36 and 37 to the first plate 23.

On the lower face 28 of the first plate 23 corresponding U-shaped channels 38, 39 and 40 are formed, running predominantly longitudinally.

These U-shaped channels, which can be seen in figures 2 and 5, receive the air from the corresponding rising hole and convey it to a respective third through hole, 41, 42 and 43, which is a descent hole again and is formed on the second plate 24.

By means of these third through holes 41, 42 and 43, the air is conveyed into corresponding exit channels 44, 45 and 46 which are formed in the lower face 47 of the second plate 24.

These exit channels 44, 45, 46 also run in the direction from front to back, substantially over the entire length of the second plate 24

From each of these exit channels 44, 45, and 46 a number of transverse branches 47, 48 and 49 extends transversely which corresponds to the number of metallic rollers 15 associated with each one of the labyrinth-like ducts 18, 19 and 20.

Each transverse branch conveys the air to a corresponding upper part 50 of a seat for a metallic roller 15.

The upper part 50 of a seat is formed on the lower face 24a of the second plate 24, whereas the lower part 21 of the same seat is formed on the third plate 25.

The third plate 25 is also made of metallic material and in particular of bronze.

On the third plate 25 the lower parts 21 of the seats for the metallic rollers 15 are provided, comprising lateral compartments 51 for guiding and translational motion for the pivots 52 of the rollers 15.

These lateral guiding compartments 51 are closed on the side of the lower face 25a of the third plate 25, and open on the side of the upper face for the insertion of the pivots 52.

The guiding compartments 51 run in a direction that is perpendicular to the main plane of the third plate 25.

Each guiding compartment 51 opens onto a plurality of cavities 54, which are designed to accommodate centering elements for the pivots 51.

In the embodiment described herein, each compartment opens onto a cylindrical cavity in the front, onto a cylindrical cavity in the rear and onto a lateral cylindrical cavity, such cavities running in parallel to the direction of movement of the rollers 15.

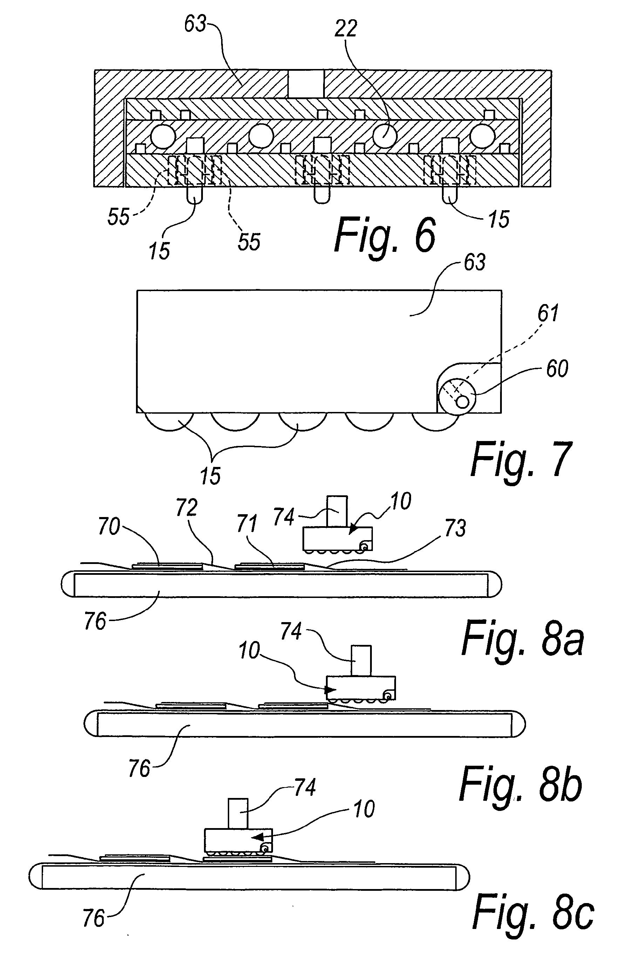

In these cavities 54 respective centering pins 55, schematically shown in figure 6, are accommodated. The guiding compartments 51 for the pivots 52 allow the rollers 15 to float inside the respective seats.

The pins 55 prevent the rollers 15 from making undesired yaw movements, i.e. rotational movements with respect to an axis that is perpendicular to the gliding plane, which would compromise the precision of the soldering operation.

The position of the rollers 15 with respect to the third plate 25, and therefore the position of the third plate 25 with respect to an underlying conducting ribbon and an underlying photovoltaic cell, is determined by means of a pair of symmetric eccentric elements 60, resting laterally with respect to the cell.

These eccentric elements 60 are each pivoted to one side of the third plate 25, and their angular position is adjustable by means of a grub screw 61.

The three plates 23, 24 and 25 are fixed to each other by screws 62 or other similar and equivalent threaded elements.

The three plates 23, 24 and 25 are covered by a half-shell 63 for thermal protection, made for example of Monalite®, or of another similar and equivalent thermal insulation material.

The functioning of the device 10 according to the invention is as follows.

The device 10 is understood to be capable of being moved by means of actuators, for example pneumatic, of a type in and of itself known.

In figure 8a two side-by-side photovoltaic cells 70 and 71 are schematically shown, each cell juxtaposed to corresponding sections of conducting ribbon 72 and 73. The cells are laid on a conveyor belt 76 which brings them to the device 10.

Once the cells with the ribbon have reached the device 10, the device 10 is lowered by the actuator means 74 until the eccentric elements 60 touch the predefined supports and the metallic rollers 15 are retracted into the supporting body 11 by the height preset with the adjustment of the eccentric elements 60.

In figure 8b the soldering movement of the device 10 is schematically shown, with relative sliding with respect to the cell 71, and with wheel-slipping of each row of rollers 15 on a conducting ribbon to be soldered to the cell, as in figure 8c.

It should be emphasised that the metallic rollers 15 and the corresponding seats 21 and 50 are dimensioned in such a way that, from the lower face 25a of the third plate 25, around each roller 15, a predetermined flow of the hot air under pressure comes out which has travelled, while heating up, through the labyrinth-like ducts 18, 19 or 20 inside the supporting body 11.

This flow of air, which is introduced into the device 10 for example by a 6 bar line, is expelled onto the soldering area, thus achieving the effect of heating the surface of the cell in the area surrounding the area which will shortly be affected by the contact with the hot rollers 15, thus lowering the thermal gradient that is created on the bus bars of the cell during soldering, and thus achieving a pre-flattening of the conducting ribbon on the bus-bar already during the phase when the device is descending, thus facilitating the contact between rollers 15 and conducting ribbon on the cell.

The air under pressure that enters the first plate 23 from the intake hole 26 travels through the labyrinth-like ducts 18, 19 and 20 and is heated due to the action of the thermal resistors in the corresponding longitudinal holes 22 in which they are accommodated.

The heating temperature to which the air is brought is determined according to the type of cell and of the conducting ribbon.

The heated air finally reaches the metallic rollers 15.

At each transverse branch 49 screws for adjusting the flow are located, for which the threaded holes 80 can be seen in figure 3.

With these air passage adjustment screws it is possible to vary the force that a soldering roller will apply to the conducting ribbon to maintain contact with the photovoltaic cell and perform the soldering.

Exiting from the third lower plate 25, the hot air performs two functions: it heats the metallic rollers 15, which transmit the heat by direct contact (i.e. by conduction) with the conducting ribbon to be soldered, and at the same time, by convection, it also heats the surface of the photovoltaic cell in a uniform manner.

The adjustment of the distance of the supporting body 11, heated by the presence of the electrical resistors, from the cells by adjustment of the eccentric elements 60 makes it possible to approach/withdraw the blower plate to/from the cell so as to optimise the contact between the rollers and the conducting ribbon, and between the conducting ribbon and the cell, thus achieving a uniform soldering and reducing the risk of breakages.

The heat energy stored by a roller 15 is the stronger the deeper it is inside the supporting body 11, being thus capable of transferring more energy via contact with the conducting ribbon. Decreasing the distance between the supporting body 11 and the cell, on the other hand, involves an increase in heat energy irradiated over the entire surface of the cell, which makes it possible to make the distribution of temperatures more uniform so as to avoid micro-breakages owing to temperature gradients that are too high. The adjustment of the eccentric elements 60 thus makes it possible to vary and adjust the value of energy transmitted to the soldering system, and so it provides a system that is flexible in its entirety and is capable of adapting to various conditions and technical specifications.

The insulating half-shell 63, which surrounds the supporting body 11 from above, prevents the dissipation of heat (thus saving energy), promotes temperature control of the soldering device, and is an excellent protective device for operator safety.

In practice it has been found that the invention fully achieves the intended aim and objects.

In particular, with the invention, a device for soldering conducting ribbon to photovoltaic cells has been provided in which the soldering of photovoltaic cells is performed through the use of air both as a transfer fluid for heat energy and as a fluid for adjusting the pressure of contact between conducting ribbon and photovoltaic cells.

This invention therefore solves the problem of difficulty in adjusting the pressure of contact that is applied on the conducting ribbon (and hence on the cells) in known types of 'contact' soldering systems.

Moreover, with the invention a device has been provided with which a soldering operation can be carried out that affects all of the section of conducting ribbon placed on the cell, or a spot soldering operation, i.e. that affects only predefined sections of the conducting ribbon placed on the cell, where it is sufficient to reprogram the movements of the actuator means 74.

Moreover, with the invention a device has been provided that uses air which can be taken from a common pressurized air line, used for example for the pneumatic movement of the rest of a machine that incorporates this device.

Furthermore, with the invention a device has been provided that is designed to function without needing to resort to expensive technologies such as laser or infrared, which is simple to handle and move, even with actuator means that are simple and of a type that is in and of itself known, and which is no less functional in terms of performance and reliability than the known types of systems and soldering means.

Also, with the invention a device for soldering conducting ribbon to photovoltaic cells has been provided, which is structurally simple and easy to use, and which can be produced at low cost.

## Claims

1. A device (10) for soldering conducting ribbon to photovoltaic cells, comprising a supporting body (11) with at least one row (12) of gliding elements arranged so as to protrude from a face (13) of said supporting body (11) in order to glide on a conducting ribbon arranged on a photovoltaic cell, **characterized in that** said gliding elements float in a direction that is transverse to the advancement direction, and are heated and pressed against the conducting ribbon by a transfer fluid, which in turn is heated by heating means (14) associated with said supporting body (11), said transfer fluid being at the same time ejected from said supporting body (11) in the vicinity of the soldering regions.

2. The device according to claim 1, **characterized in that** said gliding elements are metallic rollers (15).

3. The device according to the preceding claims, **characterized in that** the transfer fluid is air, introduced in the supporting body (11) by means of a tube (16).

4. The device according to the preceding claims, **characterized in that** said heating means (14) for the transfer fluid are constituted by a plurality of electrical resistors (17), which are inserted within the supporting body (11), said supporting body (11) being provided so as to have on the inside labyrinth-like ducts (18, 19, 20) for heating the transfer fluid and for conveying the hot transfer fluid toward the seats (21, 50) for the metallic rollers (15), in order to heat said rollers.

5. The device according to the preceding claims, **characterized in that** said supporting body (11) is provided by means of three superimposed plates (23, 24, 25) made of metallic material, for example bronze.

6. The device according to the preceding claims, **characterized in that** said first plate (23) has an intake hole (26) for the transfer fluid, said intake hole (26) being a through hole and leading onto a first channel (27) that is open on the side of the lower face (28) and runs transversely to the first plate (23), so as to convey the pressurized air both centrally and at the sides of said first plate (23), regions from which said labyrinth-like ducts (18, 19, 20) extend.

7. The device according to the preceding claims, **characterized in that** said second central plate (24) has three through holes (29, 30, 31), by means of which the air descends from the first transverse channel (27) in three longitudinal channels (32, 33, 34) formed in the lower face (24a) of the second plate (24), each channel being part of one of said labyrinth-like ducts (18, 19, 20), additional rising through holes (35, 36, 37) being provided at the ends of said longitudinal channels that lie opposite said through holes (29, 30, 31).

8. The device according to the preceding claims, **characterized in that** corresponding U-shaped channels (38, 39, 40) are formed on the lower face (28) of said first plate (23), receive air from the corresponding rising hole and convey it to a respective third through hole (41, 42, 43), which is again a descent hole and is formed in the second plate (24), via said third through holes (41, 42, 43) the air being conveyed into corresponding exit channels (44, 45, 46) formed in the lower face (24a) of the second plate (24), a number of transverse branches (47, 48, 49) that corresponds to the number of metallic rollers (15) associated with each one of the labyrinth-like ducts (18, 19, 20) extending transversely from each one of said exit channels (44, 45, 46), flow-rate adjustment screws being arranged at each transverse branch (47, 48, 49).

9. The device according to the preceding claims, **characterized in that** the lower parts (21) of the seats for the metallic rollers (15) are provided on the third plate (25) and comprise lateral compartments (51) for guiding and translational motion for the pivots (52) of the rollers (15), each guiding compartment (51) opening onto a plurality of cavities (54), which are meant to accommodate centering elements for said pivots (52).

10. The device according to the preceding claims, **characterized in that** the position of the third plate (25) with respect to an underlying conducting ribbon and an underlying photovoltaic cell is determined by means of a pair of symmetric adjustable eccentric supporting elements (60).

## Patentansprüche

1. Eine Vorrichtung (10) zum Löten von leitendem Band auf photovoltaische Zellen, die einen tragenden Körper (11) mit mindestens einer Reihe (12) gleitender Elemente umfasst, so angeordnet, dass sie aus einer Fläche (13) des tragenden Körpers (11) herausragen, um auf einem leitenden Band zu gleiten, das auf einer photovoltaischen Zelle angeordnet ist, **dadurch gekennzeichnet, dass** die gleitenden Elemente in eine Richtung schweben, die quer zur Förderungsrichtung ist, und erhitzt und von einem Übertragungsfluid gegen das leitende Band gepresst werden, wobei das Fluid wiederum von Heizmitteln (14) erhitzt wird, die mit dem tragenden Körper (11) verbunden sind, wobei das Übertragungsfluid gleichzeitig von dem tragenden Körper (11) in der Nähe des Lötbereichs ausgestoßen wird.

2. Die Vorrichtung gemäß Anspruch 1, **dadurch gekennzeichnet, dass** die gleitenden Elemente metallische Rollen (15) sind.

3. Die Vorrichtung gemäß den obigen Ansprüchen, **dadurch gekennzeichnet, dass** das Übertragungsfluid Luft ist, geleitet in den tragenden Körper (11) mit Hilfe eines Rohrs (16).

4. Die Vorrichtung gemäß den obigen Ansprüchen, **dadurch gekennzeichnet, dass** die Heizmittel (14) für das Übertragungsfluid aus einer Vielzahl elektrischer Widerstände (17) bestehen, die in den tragenden Körper (11) eingesetzt sind, wobei der tragende Körper (11) derart bereitgestellt ist, dass er an der Innenseite labyrinthartige Leitungen (18, 19, 20) zum Erhitzen des Übertragungsfluids und zum Leiten des heißen Übertragungsfluids zu den Sitzen (21, 50) für die metallischen Rollen (15), zum Erhitzen der Rollen, hat.

5. Die Vorrichtung gemäß den obigen Ansprüchen, **dadurch gekennzeichnet, dass** der tragende Körper (11) mit Hilfe dreier übereinander angeordneter Platten (23, 24, 25) bereitgestellt wird, die aus metallischem Material, zum Beispiel Bronze, bestehen.

6. Die Vorrichtung gemäß den obigen Ansprüchen, **dadurch gekennzeichnet, dass** die erste Platte (23) ein Einlassloch (26) für das Übertragungsfluid hat, wobei das Einlassloch (26) eine Durchgangsbohrung ist und zu einem ersten Kanal (27) führt, der an der Seite der unteren Fläche (28) offen ist und quer zur ersten Platte (23) verläuft, um die Druckluft sowohl zentral als auch an den Seiten der ersten Platte (23) zu befördern, Bereiche, von denen sich die labyrinthartigen Leitungen (18, 19, 20) erstrecken.

7. Die Vorrichtung gemäß den obigen Ansprüchen, **dadurch gekennzeichnet, dass** die zweite zentrale Platte (24) drei Durchgangsbohrungen (29, 30, 31) hat, durch welche die Luft aus dem ersten transversalen Kanal (27) in drei länglichen Kanälen (32, 33, 34) absteigt, die in der unteren Fläche (24a) der zweiten Platte (24) geformt sind, wobei jeder Kanal Teil einer der labyrinthartigen Leitungen (18, 29, 20) ist und zusätzliche Durchspüllöcher (35, 36, 37) an den Enden der länglichen Kanäle bereitgestellt sind, die den Durchgangsbohrungen (29, 30, 31) gegenüberliegen.

8. Die Vorrichtung gemäß den obigen Ansprüchen, **dadurch gekennzeichnet, dass** entsprechende Ü-förmige Kanäle (38, 39, 40) an der unteren Fläche (28) der ersten Platte (23) geformt sind, Luft vom entsprechenden Spülloch empfangen und sie an eine entsprechende dritte Durchgangsbohrung (41, 42, 43) weiterleiten, die wieder ein absteigendes Loch und in der zweiten Platte (24) geformt ist, wobei die Luft durch die dritten Durchgangsbohrungen (41, 42, 43) in entsprechende Austrittskanäle (44, 45, 46) geleitet wird, die in der unteren Fläche (24a) der zweiten Platte (24) geformt sind, wobei sich eine Reihe transversaler Verzweigungen (47, 48, 49), die der Anzahl metallischer Rollen (15) entspricht, welche mit jeder der labyrinthartigen Leitungen (18, 19, 20) verknüpft sind, quer von jedem der Austrittskanäle (44, 45, 46) erstreckt, wobei Strömungsraten-Stellschrauben an jeder transversalen Verzweigung (47, 48, 49) angeordnet sind.

9. Die Vorrichtung gemäß den obigen Ansprüchen, **dadurch gekennzeichnet, dass** die unteren Teile (21) der Sitze für die metallischen Rollen (15) an der dritten Platte (25) bereitgestellt sind und seitliche Kammern (51) für die Führung und Translationsbewegung für die Zapfen (52) der Rollen (15) umfassen, wobei jede Führungskammer (51) sich zu einer Vielzahl von Hohlräumen (54) hin öffnet, welche dazu dienen, Zentrierungselemente für die Zapfen (52) aufzunehmen.

10. Die Vorrichtung gemäß den obigen Ansprüchen, **dadurch gekennzeichnet, dass** die Position der dritten Platte (25) im Verhältnis zu einem darunter liegenden leitenden Band und einer darunter liegenden photovoltaischen Zelle mit Hilfe eines Paars symmetrischer einstellbarer exzentrischer tragender Elemente (60) bestimmt wird,

## Revendications

1. Dispositif (10) de soudage d'un ruban conducteur sur des cellules photovoltaïques, comprenant un corps de support (11) avec au moins une rangée (12) d'éléments glissants disposés de manière à faire saillie depuis une face (13) dudit corps de support (11) afin de glisser sur un ruban conducteur placé sur une cellule photovoltaïque, **caractérisé en ce que** lesdits éléments glissants flottent dans une direction qui est transversale par rapport à la direction d'avance, et sont chauffés et pressés contre le ruban conducteur par un fluide de transfert, qui est à son tour chauffé par un moyen de chauffage (14) associé audit corps de support (11), ledit fluide de transfert étant en même temps éjecté dudit corps de support (11) au voisinage des régions de soudage.

2. Dispositif selon la revendication 1, **caractérisé en ce que** lesdits éléments glissants sont des roulettes métalliques (15).

3. Dispositif selon les revendications précédentes, **caractérisé en ce que** le fluide de transfert est de l'air, introduit dans le corps de support (11) au moyen d'un tube (16).

4. Dispositif selon les revendications précédentes, **caractérisé en ce que** ledit moyen de chauffage (14) pour le fluide de transfert est constitué par une pluralité de résistances électriques (17), qui sont insérées dans le corps de support (11), ledit corps de support (11) étant prévu pour comporter à l'intérieur des conduits en labyrinthe (18, 19, 20) pour chauffer le fluide de transfert et pour acheminer le fluide de transfert chaud vers les sièges (21, 50) des roulettes métalliques (15), afin de chauffer lesdites roulettes.

5. Dispositif selon les revendications précédentes, **caractérisé en ce que** ledit corps de support (11) est fourni au moyen de trois plaques superposées (23, 24, 25) faites d'un matériau métallique, par exemple du bronze.

6. Dispositif selon les revendications précédentes, **caractérisé en ce que** ladite première plaque (23) comporte un trou d'entrée (26) pour le fluide de transfert, ledit trou d'entrée (26) étant un trou traversant et conduisant à un premier canal (27) qui est ouvert du côté de la face inférieure (28) et qui est orienté transversalement par rapport à la première plaque (23), afin de transporter l'air sous pression à la fois de façon centrale et sur les côtés de ladite première plaque (23), régions à partir desquelles s'étendent lesdits conduits en labyrinthe (18, 19, 20).

7. Dispositif selon les revendications précédentes, **caractérisé en ce que** ladite deuxième plaque, ou plaque centrale, (24) comporte trois trous traversants (29, 30, 31) au moyen desquels l'air descend du premier canal transversal (27) dans trois canaux longitudinaux (32, 33, 34) formés dans la face inférieure (24a) de la deuxième plaque (24), chaque canal faisant partie de l'un desdits conduits en labyrinthe (18, 19, 20), des trous traversants montants supplémentaires (35, 36, 37) étant prévus aux extrémités desdits canaux longitudinaux qui se trouvent à l'opposé desdits trous traversants (29, 30, 31).

8. Dispositif selon les revendications précédentes, **caractérisé en ce que** des canaux correspondants en forme de U (38, 39, 40) sont formés sur la face inférieure (28) de ladite première plaque (23), reçoivent de l'air du trou montant correspondant et l'acheminent jusqu'à un troisième trou traversant respectif (41, 42, 43), qui est de nouveau un trou de descente et est formé dans la deuxième plaque (24), via lesdits troisièmes trous traversants (41, 42, 43) l'air étant conduit dans des canaux de sortie correspondantes (44, 45, 46) formés dans la face inférieure (24a) de la deuxième plaque (24), un nombre de branches transversales (47, 48, 49) qui correspond au nombre de roulettes métalliques (15) associées à chacun des conduits en labyrinthe (18, 19, 20) s'étendant transversalement depuis chacun desdits canaux de sortie (44, 45, 46), des vis de réglage de débit étant placées dans chaque branche transversale (47, 48, 49).

9. Dispositif selon les revendications précédentes, **caractérisé en ce que** les parties inférieures (21) des sièges pour les roulettes métalliques (15) sont fournies sur la troisième plaque (25) et comprennent des compartiments latéraux (51) pour le guidage et le mouvement de translation pour les pivots (52) des roulettes (15), chaque compartiment de guidage (51) débouchant sur une pluralité de cavités (54) dans lesquelles doivent être logés des éléments de centrage pour lesdits pivots (52).

10. Dispositif selon les revendications précédentes, **caractérisé en ce que** la position de la troisième plaque (25) par rapport à un ruban conducteur sous-jacent et une cellule photovoltaïque sous-jacente est déterminée à l'aide d'une paire d'éléments de support excentriques, symétriques et réglables (60).
